# FASCICULE DE BREVET EUROPEEN

(11) **EP 0 667 320 B1**
(45) Date de publication et mention de la délivrance du brevet: **31.05.2000**
(21) Numéro de dépôt: 95400255.6
(22) Date de dépôt: 08.02.1995
(51) Int. Cl.: C03B 27/004

(54) **Procédé et dispositifs de trempe d'une feuille de verre par contact**
Verfahren und Vorrichtung zum Härten einer Glasscheibe mittels Kontakt
Method and apparatus for tempering a glass sheet by contact

(30) Priorité: 10.02.1994 DE 4404165
(43) Date de publication de la demande: 16.08.1995
(73) Titulaire: SAINT-GOBAIN VITRAGE, 92400 Courbevoie (FR)
(72) Inventeur: Kuster, Hans-Werner, Dr., D-52066 Aachen (DE); Bremer, Carsten, D-52499 Baesweiler (DE)
(74) Mandataire: Muller, René

(56) Documents cités:
- EP-A- 0 404 677
- DE-A- 3 800 567
- FR-A- 826 690

## Description

L'invention concerne un procédé et des dispositifs de trempe ou précontrainte par contact de feuilles de verre et en particulier de vitres d'automobile dans lesquels des plateaux de serrage refroidis agissent sur les surfaces des feuilles de verre chauffées à la température de trempe.

On connaît par exemple un procédé de ce genre d'après le brevet européen EP-B1-0 404 677 B1. Ce procédé consiste à amener la feuille de verre chauffée à la température de trempe dans une espèce de presse dans laquelle la feuille de verre est brusquement refroidie et donc trempée, en même temps que les surfaces périphériques de la feuille de verre sont refroidies par des rayons d'air refroidissant perpendiculaires aux surfaces périphériques et sont donc également exposées à la précontrainte par pression.

Les vitres de voitures comportent souvent un ou plusieurs trous traversants. C'est le cas par exemple des vitres latérales amovibles quand un mécanisme de levage et / ou des broches-guides doivent être fixés à la feuille de verre. Les lunettes arrière présentent aussi parfois une perforation par laquelle est conduit le pivot d'une tringle d'essuie-glaces.

Comme on le sait, les trous de la feuille de verre doivent être ménagés avant la trempe de la feuille de verre car une feuille de verre trempée serait brisée par le perçage. Il s'est avéré que lorsqu'on trempe des feuilles de verre en les trempant à l'air froid, même les feuilles pourvues de perforations présentent une grande résistance à la flexion tandis que les feuilles perforées trempées par contact présentent moins de résistance à la flexion.

L'invention est fondée sur le besoin de perfectionner le procédé de trempe par contact connu d'une feuille de verre pour pouvoir tremper aussi les feuilles perforées de façon qu'elles présentent une résistance à la flexion correspondant à celle des feuilles perforées trempées avec des coffrets à bulles d'air habituels. L'invention a aussi pour tâche de créer des dispositifs appropriés pour réaliser ce procédé.

Dans les feuilles de verre qui présentent un ou plusieurs trous traversants, la présente invention consiste à résoudre ce problème en projetant un gaz refroidissant sur les surfaces intérieures qui délimitent les perforations des feuilles de verre pendant l'action des plaques de serrage.

Le procédé de l'invention consiste donc à appliquer le procédé de trempe par contact connu pour les feuilles de verre à un ou plusieurs trous traversants sous réserve que l'on soumette aussi les parois des trous à un refroidissement de surface sélectif par convection. De la sorte, on produit aussi à la surface des trous une précontrainte par pression qui provoque l'augmentation souhaitée de la résistance à la flexion. Une feuille de verre trempée selon l'invention présente donc une homogénéité des contraintes superficielles résultant d'une trempe par contact et l'image en lumière polarisée, de ladite feuille, présente une ligne neutre concentrique à la périphérie du trou caractéristique des contraintes de compression obtenues au bord du trou.

Un premier mode de réalisation d'un dispositif de trempe par contact convenant pour appliquer le procédé selon l'invention avec deux plaques de serrage se distingue par le fait qu'à l'emplacement des plaques de serrage qui recouvrent une perforation de la feuille de verre l'une des plaques de serrage comporte une ou plusieurs ouvertures d'afflux ou de tuyères pour un gaz refroidissant tandis que l'autre plaque de serrage présente une ou plusieurs ouvertures de reflux à l'emplacement correspondant. Ce mode de réalisation convient particulièrement pour les presses de trempe par contact dont les deux plaques de serrage sont des plaques de métal massif parcourues par des conduits d'eau de refroidissement.

Un autre mode de réalisation d'un dispositif conforme à l'invention se distingue par le fait que seule l'une des deux plaques de serrage est pourvue d'une ou plusieurs ouvertures d'afflux d'un gaz refroidisseur ainsi que d'une ou plusieurs ouvertures de reflux, tant les ouvertures d'afflux que de reflux étant voisines à l'intérieur de l'emplacement de la plaque qui recouvre une perforation de la feuille de verre. Ce mode de réalisation convient particulièrement pour les presses de trempe par contact où l'une des plaques de serrage est en métal massif, l'autre comportant un espace creux rempli d'eau ayant au moins la taille de la feuille de verre, cet espace étant obturé par une membrane souple imperméable du côté en contact avec la feuille de verre.

D'autres avantages, agencements fonctionnels et perfectionnements du dispositif selon l'invention ressortent des sous-revendications et de la description suivante des modes de réalisation préférés à l'appui des dessins. Les dessins représentent :
à la fig. 1, un premier mode de réalisation d'un dispositif de trempe selon l'invention,
à la fig. 2, un deuxième mode de réalisation d'un dispositif de trempe selon l'invention,

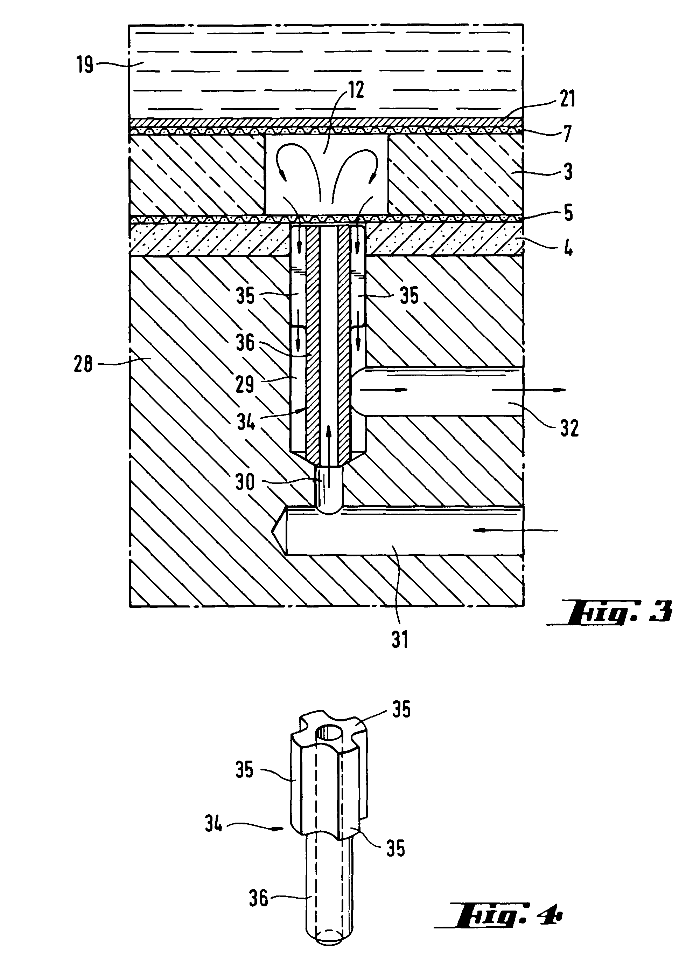

à la fig. 3, un autre agencement des conduits d'afflux et de reflux du dispositif selon la fig. 2, et
à la fig. 4, un détail de la fig. 3.

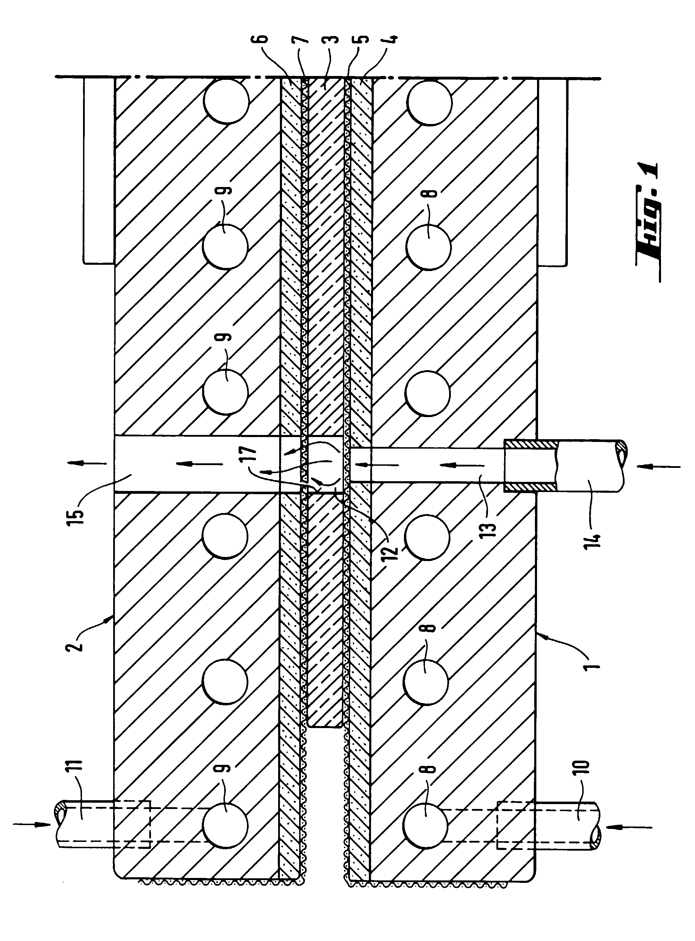

Le dispositif de trempe par contact représenté à la fig. 1 comprend une plaque de serrage inférieure 1 et une plaque de serrage supérieure 2. Entre ces plaques de serrage se trouve une feuille de verre 3. La plaque de serrage inférieure est pourvue de deux couches élastiques 4 et 5 à forte conductivité thermique, la couche 4 consistant par exemple en une plaque de graphite lamellaire et la couche superposée étant en tissu de fibres métalliques. Les fibres élémentaires qui forment le tissu métallique présentent de préférence un diamètre inférieur à 50 micromètres. De même, la plaque de serrage supérieure est pourvue de couches élastiques 6 et 7. Les deux plaques de serrage 1 et 2 sont pourvues de conduits 8 et 9 où passe l'eau refroidissante. L'amenée de l'eau refroidissante s'effectue par les conduites 10 et 11. L'eau froide est évacuée par des conduites non représentées.

La plaque de serrage inférieure 1, y compris la couche 4, est pourvue d'une perforation 13 à laquelle se rattache un tube 14, raccordé à une conduite d'air comprimé. De même, la plaque de serrage supérieure 2, y compris la couche 6 présente un trou traversant 15 par lequel s'échappe l'air insufflé.

Les tissus en fibres métalliques 5 et 7 ne s'interrompent pas à l'emplacement des perforations 13 et 15 mais s'étendent au-dessus de leurs orifices. Pour garantir une perméabilité à l'air suffisante à cet emplacement, il faut utiliser ici des tissus ou des mailles à porosité d'au moins 60 % et, de préférence, supérieure à 80 %. Les tissus et les mailles employés pour cela sont décrits par exemple dans les brevets européens 0 312 439 B1 et 0 387 111 B1.

Les orifices des perforations 13 et 15 se trouvent tous deux à l'intérieur de l'emplacement de chacune des plaques correspondant au trou de la feuille de verre 3. Dans le cas représenté ici, les perforations 13 et 15 sont toutes deux perpendiculaires à la surface de la feuille de verre. Dans cette disposition, le gaz refroidisseur sortant de la perforation 13 s'écoule d'abord dans la perforation 12 de la feuille de verre 3, refroidit ainsi les surfaces inférieures délimitant la perforation 12 et parvient ensuite à l'atmosphère par la perforation 15.

Ce dispositif permet de réaliser comme suit le procédé de l'invention : La plaque de serrage supérieure est soulevée. La feuille de verre portée à la température de trempe est amenée entre les plaques de serrage 1 et 2 refroidis par liquide et la plaque de serrage 2 est comprimée sur la feuille de verre 3. Pendant l'action des plaques refroidissantes 1 et 2 sur la feuille de verre 3, une soupape disposée dans le tube 14 est ouverte et le gaz refroidisseur est insufflé par elle dans la perforation 12. Le gaz refroidisseur s'écoule ensuite dehors par la perforation 15.

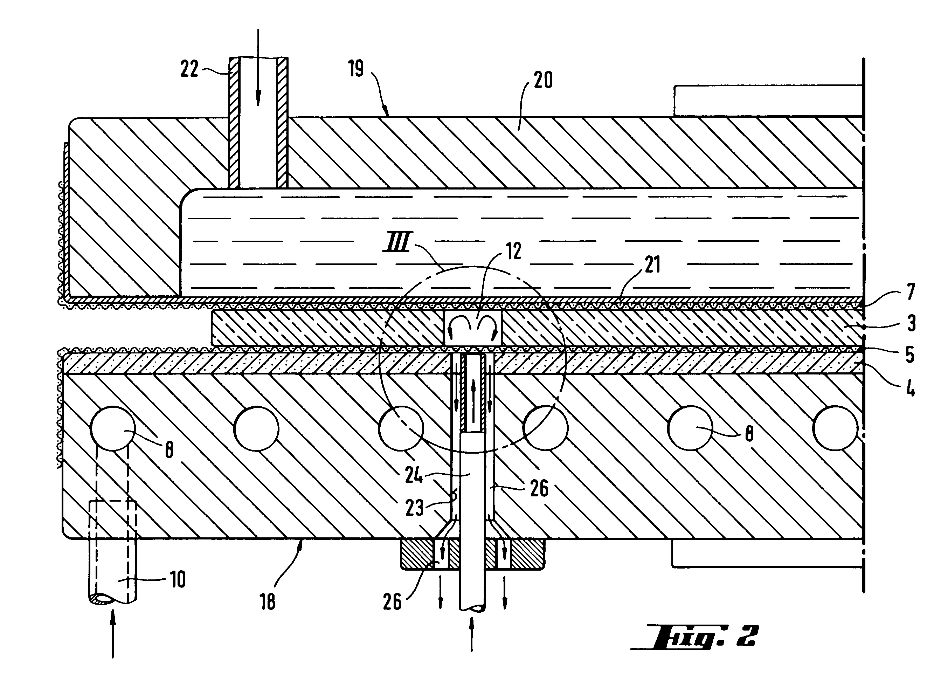

Le dispositif de précontrainte que représente la figure 2 comprend également une autre plaque de serrage inférieure 18 et une plaque supérieure 19 entre lesquelles se trouve une feuille de verre 3. Comme à l'exemple précédent, la plaque de serrage inférieure 18 est pourvue de deux couches 4 et 5 d'élastique à forte conductivité thermique. La plaque de serrage supérieure se constitue d'un boîtier métallique 20 obturé au-dessous par une membrane souple 21 et remplie d'eau refroidissante. L'eau refroidissante est amenée par un tube 22 et s'écoule par un autre tube, non représenté. La régulation de l'amenée d'eau et / ou de son évacuation permet de régler la pression et la vitesse d'écoulement de l'eau à l'intérieur du boîtier métallique 20.

A l'emplacement de la perforation 12 de la feuille de verre, le moule de flexion inférieur 18 est pourvu d'un trou traversant 23 à l'intérieur duquel un tube à gicleur 24 est disposé coaxialement à la perforation 23 et s'achève peu au-dessous de la couche de tissu 5. Entre la paroi extérieure du tube à gicleur 24 et la paroi de la perforation 23 reste un espace creux de section annulaire qui sert de conduit d'évacuation 26 pour l'air refroidissant amené par le tube à gicleur 24. Le tube à gicleur 24 est raccordé à une source d'air comprimé appropriée.

Pour réaliser le procédé selon l'invention, on place la feuille de verre entre les plaques de serrage comme dans l'exemple précédent et l'on ferme la presse. Pendant l'action des plaques refroidissantes 18 et 19 sur la feuille de verre 3, la paroi du trou 12 de la feuille de verre admet de nouveau un gaz refroidissant. Pour obtenir un débit de gaz refroidisseur suffisant et un grand taux de refroidissement, on utilise de préférence de l'air à une surpression de 100 à 500 Pa comme agent de refroidissement. Après avoir refroidi la paroi de la perforation 12 et s'être ainsi réchauffé, le gaz refroidisseur descend par le conduit d'écoulement 26. S cela est souhaitable pour une raison quelconque, on peut accroître l'écoulement du gaz refroidisseur en augmentant sa surpression et / ou en pompant sélectivement au moyen d'un système de pompage non représenté.

La disposition tant du conduit d'afflux que de reflux du moule de flexion 18 permet de ne pas modifier le moule de flexion supérieur. Ce fait est fort utile quand le moule de flexion supérieur est pourvu d'une membrane souple car il permet de conserver intégralement la souplesse de ce moule et donc sa capacité de s'appliquer régulièrement sur la feuille de verre.

Le dispositif que représente la fig. 2 est aussi très avantageux parce qu'il permet de n'effectuer les modifications nécessaires à la réalisation de l'invention que sur une seule des deux plaques de serrage. Les modifications à apporter, c'est-à-dire la pratique des perforations dans la plaque de serrage inférieure peuvent même ne s'effectuer que quand les dispositif de trempe par contact existent déjà. En conséquence, quand on pratique seulement un ou plusieurs trous supplémentaires dans les feuilles de verre sans en modifier la forme, ou quand on ménage un trou à un autre endroit qu'avant il n'est pas nécessaire au total de confectionner de nouveau moule.

Comme déjà dit, le pompage sélectif du gaz qui s'échappe par le conduit d'évacuation peut être avantageux le cas échéant. Un mode de construction qui convient particulièrement pour cela est représenté sous forme de coupe au secteur III de la figure 2. Pour le reste, la construction des deux plaques de serrage 18 et 19, y compris la couche élastique 4 et de la couche de tissu 5 placée au-dessus dans la plaque de serrage 18 ainsi que de la membrane 21 et de la couche de tissu 3 de la plaque de serrage supérieure 19 correspond au dispositif décrit à l'aide de la fig. 2.

Dans ce cas, un trou borgne 29 est ménagé dans le corps métallique 28 de la plaque de serrage 18. Coaxialement à ce trou borgne 29, se raccorde d'une part une perforation 30 de moindre diamètre qui débouche dans une perforation perpendiculaire 31, laquelle sert d'autre part de canal d'afflux de l'air refroidisseur. D'autre part, une perforation 32 est ménagée perpendiculairement au trou borgne 29, y débouche et sert de canal d'écoulement de l'air refroidisseur. Dans le trou borgne 29 est insérée concentriquement à celui-ci une pièce essentiellement tubulaire 34 dont le haut présente des nervures à saillies radiales 35 qui la soutiennent contre la paroi de la perforation 29. La partie tubulaire inférieure 36 de cette pièce insérée 34 constitue le raccordement avec la perforation 30, tandis que les conduits restant entre les nervures 35 se raccordent au conduit d'écoulement 32.

Même dans ce cas, il est important d'une part que le tissu ou les mailles 5 ne soit pas interrompu à l'embouchure de la perforation 29 et d'autre part qu'il présente une porosité suffisante pour que l'air refroidisseur puisse traverser le tissu ou les mailles en quantité suffisante.

Dans les exemples précédents, l'air de refroidissement a été conduit chaque fois au milieu de la perforation du centre de la feuille de verre et évacué près de la paroi du trou après avoir tourbillonné à l'intérieur de celui-ci. Toutefois, on peut aussi procéder en sens inverse, c'est-à-dire inverser les conduits d'afflux et de reflux et de faire pénétrer ainsi l'air refroidisseur dans le trou près de la paroi de celui-ci en aspirant par un tuyau central. On peut également conformer autrement les ouvertures de reflux si cela s'avère utile.

Tous ces modes de réalisation ont pour point commun que, contrairement aux méthodes de trempe connues, l'air refroidissant n'est pas orienté perpendiculairement aux surfaces à précontraindre mais dans le sens axial du trou, c'est-à-dire parallèlement aux parois à refroidir brusquement. Fait surprenant, il s'est avéré qu'on obtient de cette façon une vitesse de refroidissement des parois des trous parfaitement suffisante, tout au moins à l'emplacement des trous. L'avantage particulier de ce procédé est que l'on peut obtenir ainsi la précontrainte de la paroi des trous avec des moyens relativement simples.

## Revendications

1. Procédé de trempe par contact de feuilles de verre (3) comportant un ou plusieurs trous (12), dans lequel des plaques de serrage refroidies (1, 2) agissent sur les surfaces de feuilles de verre (3) chauffées à la température de trempe, **caractérisé par le fait que** les surfaces intérieures délimitant un trou (12) sont frappées par un jet de gaz refroidisseur pendant l'action des plaques de serrage (1, 2) sur ces feuilles de verre (3).

2. Dispositif de trempe par contact d'une feuille de verre (3) comportant un ou plusieurs trous (12) le dispositif comportant deux plaques de serrage refroidies (1, 2), **caractérisé par le fait que** dans les parties des plaques de serrage (1 et 2) recouvrant un des trous de la feuille de verre (3) l'une des plaques de serrage (1) comporte au moins une ouverture d'afflux ou une tuyère (13) pour un gaz refroidissant et que l'autre plaque de serrage (2) présente au moins un trou de reflux (15).

3. Dispositif de trempe par contact d'une feuille de verre (3) présentant un ou plusieurs trous (12), le dispositif comportant deux plaques de serrage refroidies (1, 2), **caractérisé par le fait qu**'une plaque de serrage (18) présente, sur son côté tourné vers la feuille de verre (3), une ouverture d'afflux ou une tuyère pour un gaz refroidissant et au moins une ouverture de reflux, l'ouverture d'afflux comme l'ouverture de reflux se trouvant près l'une de l'autre à l'intérieur de l'emplacement de la plaque de serrage (18) recouvrant un trou (12) de la feuille de verre (3).

4. Dispositif selon la revendication 3, **caractérisé par le fait qu'**un tube à gicleur (24) orienté vers la feuille de verre et constituant l'ouverture d'afflux se trouve à l'intérieur de l'une des perforations formant le conduit de reflux.

5. Dispositif selon la revendication 4, **caractérisé par le fait que** le tube à gicleur (24) et la perforation (23) formant le conduit de reflux sont disposés de façon coaxiale et concentrique l'un à l'autre.

6. Dispositif selon la revendication 4 ou 5, **caractérisé par le fait que** le tube à gicleur (24) est orienté dans le sens de l'axe du trou.

7. Dispositif selon l'une des revendications 2 à 6, **caractérisé par le fait que** les plaques de serrage (1 et 2 ; 18 et 19) sont recouvertes, du côté venant au contact de la feuille de verre (3) par un tissu ou des mailles perméables à l'air (5 ou 7) constitué de fibres résistantes à la chaleur et à forte conductivité thermique, le tissu ou les mailles (5 ou 7) recouvrant sans interruption les orifices d'afflux ou de reflux des plaques de serrage.

8. Dispositif selon la revendication 7, **caractérisé par le fait que** le tissu ou les mailles (5 ou 7) recouvrant les plaques de serrage sont en fibres métalliques et présentent une porosité d'au moins 60 % et de préférence de plus de 80 %.

## Patentansprüche

1. Verfahren zum Kontaktvorspannen von Glasscheiben (3) mit einem oder mehreren Löchern (12), bei dem auf die Oberflächen der auf Vorspanntemperatur erwärmten Glasscheiben gekühlte Preßplatten (1, 2) einwirken, **dadurch gekennzeichnet**, daß die ein Loch (12) begrenzenden Innenflächen während des Einwirkens der Preßplatten (1, 2) auf diese Glasscheiben (3) mit einem Kühlgas beaufschlagt werden.

2. Vorrichtung zum Kontaktvorspannen einer ein oder mehrere Löcher (12) aufweisenden Glasscheibe (3) mit zwei gekühlten Preßplatten (1, 2), **dadurch gekennzeichnet,** daß in den ein Loch (12) in der Glasscheibe (3) abdeckenden Bereichen der Preßplatten (1 und 2) die eine Preßplatte (1) mindestens eine Zuströmöffnung oder Düse (13) für ein Kühlgas und die andere Preßplatte (2) mindestens eine Abströmöffnung (15) aufweist

3. Vorrichtung zum Kontaktvorspannen einer ein oder mehrere Löcher (12) aufweisenden Glasscheibe (3) mit zwei gekühlten Preßplatten (1, 2), **dadurch gekennzeichnet**, daß eine Preßplatte (18) auf ihrer der Glasscheibe (3) zugewandten Seite wenigstens eine Zuströmöffnung oder Düse für ein Kühlgas und wenigstens eine Abströmöffnung aufweist, wobei sowohl die Zuströmöffnung als auch die Abströmöffnung einander benachbart innerhalb des ein Loch (12) in der Glasscheibe (3) abdeckenden Bereichs der Preßplatte (18) liegen.

4. Vorrichtung nach Anspruch 3, **dadurch gekennzeichnet**, daß ein die Zuströmöffnung bildendes, zur Glasscheibe (3) gerichtetes Düsenrohr (24) innerhalb einer den Abströmkanal bildenden Bohrung (23) liegt.

5. Vorrichtung nach Anspruch 4, **dadurch gekennzeichnet**, daß das Düsenrohr (24) und die den Abströmkanal bildende Bohrung (23) konzentrisch koaxial zueinander angeordnet sind

6. Vorrichtung nach Anspruch 4 oder 5, **dadurch gekennzeichnet**, daß das Düsenrohr (24) in Richtung der Lochachse ausgerichtet ist.

7. Vorrichtung nach einem der Ansprüche 2 bis 6, **dadurch gekennzeichnet**, daß die Preßplatten (1, 2; 18, 19) auf der mit der Glasscheibe (3) in Kontakt kommenden Seite mit einem luftdurchlässigen Gewebe oder Gewirk (5,7) aus hitzebeständigen Fasern mit hoher Wärmeleitfähigkeit überzogen sind, wobei das Gewebe oder Gewirk (5,7) die Zuström- und die Abströmöffnungen in den Preßplatten ohne Unterbrechung überdeckt.

8. Vorrichtung nach Anspruch 7, **dadurch gekennzeichnet**, daß das die Preßplatten abdeckende Gewebe oder Gewirk (5,7) aus Metallfasern besteht und eine den Luftdurchtritt erlaubende Porosität von wenigstens 60 %, vorzugsweise von mehr als 80 %, aufweist.

## Claims

1. Process for contact tempering of glass sheets (3) having one or more holes (12), in which cooled clamping plates (1, 2) act on the surfaces of glass sheets (3) heated to the tempering temperature, characterized in that the internal surfaces defining a hole (12) are struck by a cooling gas jet during the action of the clamping plates (1, 2) on said glass sheets (3).

2. Device for the contact tempering of a glass sheet (3) having one or more holes (12), the device having two cooled clamping plates (1, 2), characterized in that in the parts of the clamping plates (1, 2) covering one of the holes of the glass sheet (3) one of the clamping plates (2) has at least one inflow opening or a nozzle (13) for a cooling gas and that the other clamping plate (2) has at least one backflow hole (15).

3. Device for contact tempering of a glass sheet (3) having one or more holes (12), the device having two cooled clamping plates (1, 2), characterized in that a clamping plate (18) has on its side turned towards the glass sheet (3) an inflow opening or a nozzle for a cooling gas and at least one backflow opening, the inflow opening like the backflow opening being close to one another in the interior of the location of the clamping plate (18) covering a hole (12) of the glass sheet (3).

4. Device according to claim 3, characterized in that a jet tube (24) oriented towards the glass sheet and constituting the inflow opening is located within one of the perforations forming the backflow duct.

5. Device according to claim 4, characterized in that the jet tube (24) and the perforations (23) forming the reflux duct are arranged coaxially and concentrically to one another.

6. Device according to claim 4 or 5, characterized in that the jet tube (24) is oriented in the direction of the axis of the hole.

7. Device according to one of the claims 2 to 6, characterized in that the clamping plates (1, 2; 18, 19) are covered on the side coming into contact with the glass sheet (3) with a fabric or meshes which are permeable to air (5 or 7) constituted by heat resistant fibres having a high thermal conductivity, said fabric or meshes (5 or 7) uninterruptedly covering the inflow or backflow orifices of the clamping plates.

8. Device according to claim 7, characterized in that the fabric or meshes (5 or 7) covering the clamping plates are of metal fibres and have a porosity of at least 60% and preferably more than 80%.
